# EUROPEAN PATENT SPECIFICATION

(11) **EP 0 524 841 B1**
(45) Date of publication and mention of the grant of the patent: **24.01.1996**
(21) Application number: 92306847.2
(22) Date of filing: 27.07.1992
(51) Int. Cl.: C08L 21/00, A63B 37/00, C08K 5/09

(54) **Golf ball with improved cover**
Golfball mit verbesserter Hülle
Revêtement amélioré pour balle de golf

(30) Priority: 26.07.1991 US 733789
(43) Date of publication of application: 27.01.1993
(73) Proprietor: WILSON SPORTING GOODS COMPANY, Chicago, Illinois 60631 (US)
(72) Inventor: Proudfit, James R., Humboldt, Tennessee 38343 (US)
(74) Representative: W.P. Thompson & Co.

(56) References cited:
- DE-A- 1 428 838
- GB-A- 1 012 710
- GB-A- 1 078 198
- GB-A- 2 206 889
- US-A- 4 971 329
- US-A- 4 984 803

## Description

This invention relates to golf balls, and, more particularly, to a golf ball with an improved cover which includes a blend of balata and a crosslinkable elastomer.

Golf balls which are currently available fall into two general categories -- balls which include a balata cover and balls which include a more durable, cut-resistant cover. Balata covers are made from natural balata, synthetic balata, or a blend of natural and synthetic balata. Natural rubber or other elastomers may also be included. Synthetic balata is trans polyisoprene and is commonly sold under the designation TP-301 available from Kuraray Isoprene Company Ltd. Most cut-resistant covers utilize Surlyn ionomer, which is an ionic copolymer of methacrylic acid and ethylene available from E.I. du Pont de Nemours & Co.

A number of golfers, primarily professional and low handicap golfers, prefer balata covered balls because of the higher spin rate, control, "feel," and "click" which balata provides. "Feel" is the overall sensation imparted to a golfer when the ball is hit, and "click" refers to the sound made when the clubhead hits the ball. However, balata covered balls are more expensive and are less resistant to cutting than Surlyn covered balls.

Conventional balata covered 3 piece golf balls are produced by winding resilient, low heat-resistant elastic thread over a soft rubber or liquid rubber center, which must first be frozen to permit winding the rubber thread, and molding a conventional soft balata cover over the windings. The balata is conventionally vulcanized or crosslinked by using sulfur as the crosslinker or vulcanizing agent.

This process has proven to be very costly and requires numerous extra production steps in manufacture, extended cure time frames in hot room areas, and specified ambient conditions in order to complete the sulfur crosslinking system. The procedures limit the consistency of the crosslinking, reduce the ability to initiate good work-in-process production procedures and maintain normal inventory levels, and limit the time frame after ball finishing for final cover crosslinking which develops the final physical properties of the cover and the ball.

In addition, conventional processing methods for balata covered balls produce relatively low yields of good cosmetic quality balls because the additional processing steps which are required before complete cover crosslinking occurs can damage the cover surface. Also, extra steps are required in conventional balata ball production methods including chlorination and ball rinses to prepare the cover surface for acceptable paint adhesion to the balata surface. Multiple coats of pigmented paint are normally applied prior to logo stamping, then a final clear, two component or ultra violet curable coating is applied to protect the ball surface and logo.

While the ball is played, additional paint durability problems may be exhibited in the form of scuffing and micro cracking. Balata golf balls produced using the conventional process methods also suffer from color and color stability problems.

Surlyn covered balls are cheaper than balata balls not only because Surlyn is cheaper than balata but because the Surlyn balls can be processed after molding much easier and faster than balata balls. The substantial processing differences between balata balls and Surlyn balls can be seen by comparing Tables 1 and 2, which describe the conventional processing steps for manufacturing 3 piece balata and 3 piece Surlyn golf balls. The term "3 piece" is commonly used to refer to a golf ball which has a center, a layer of elastic windings over the center, and a cover. The term "2 piece" is used to refer to a golf ball which has a solid core and a cover. Table 3 describes the conventional processing steps for a 2 piece Surlyn golf ball. The processing steps described in Tables 1-3 are well known in the golf ball industry, and a detailed description thereof is unnecessary.

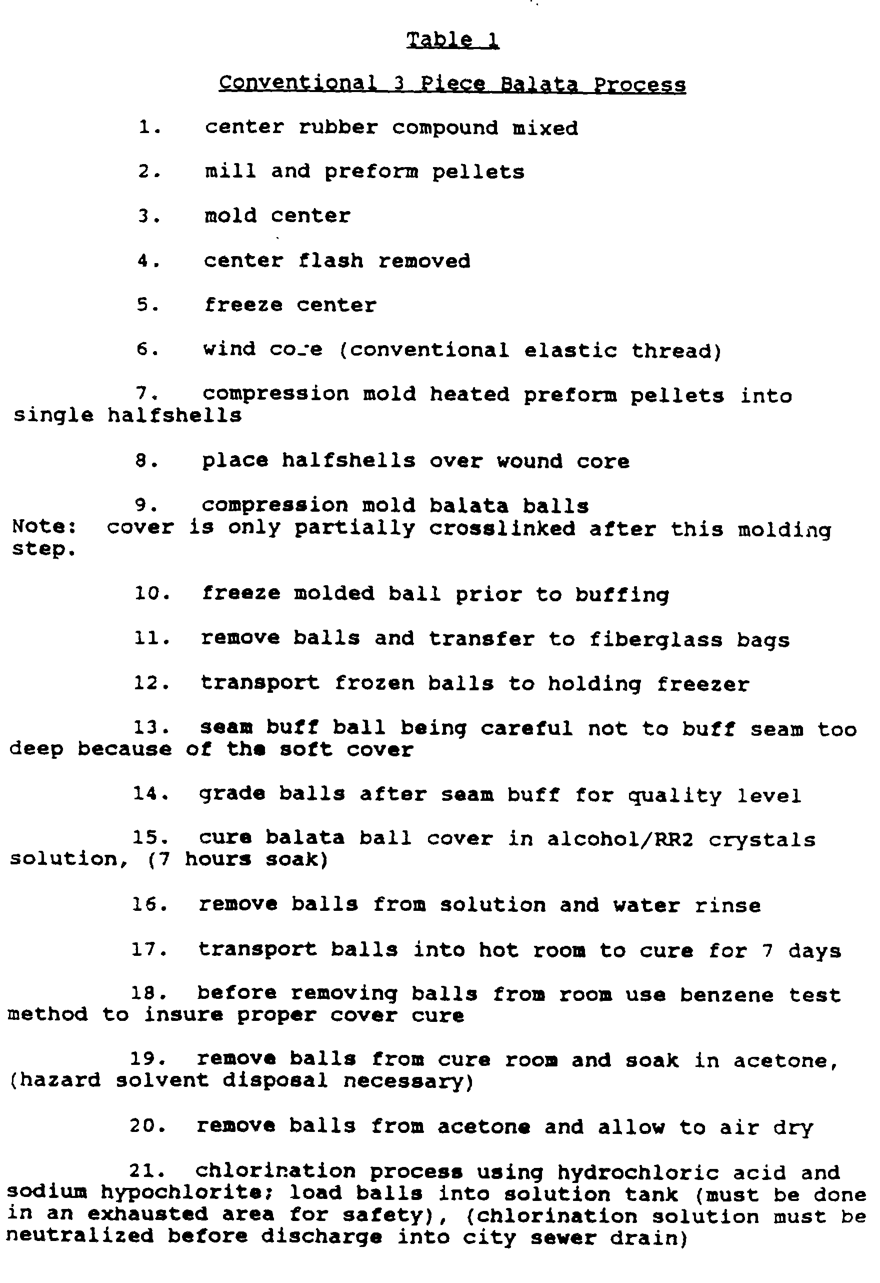

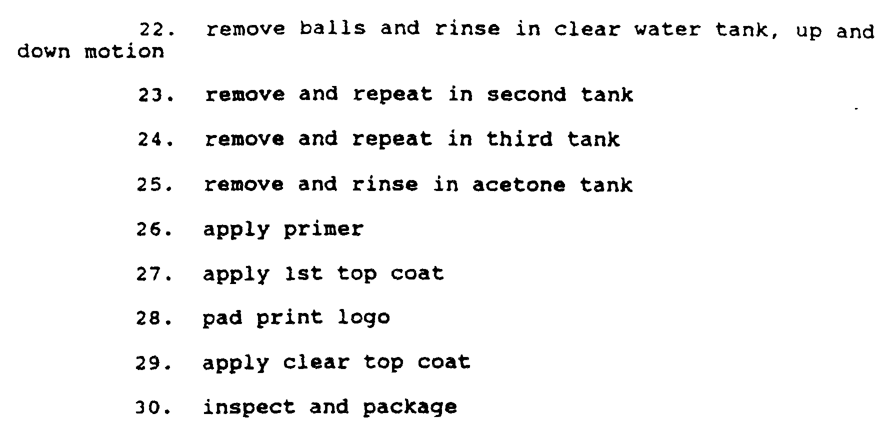

**Table 2**

| Conventional 3 Piece Surlyn Process | |
|---|---|
| 1. | center rubber compound mixed |
| 2. | mill and preform slug |
| 3. | mold center |
| 4. | center flash removed |
| 5. | wind center (conventional elastic thread) |
| 6. | injection mold halfshells |
| 7. | place halfshells over core |
| 8. | compression mold ball |
| 9. | seam buff parting line |
| 10. | vibratory finish ball |
| 11. | apply primer |
| 12. | pad print logo |
| 13. | apply clear top coat |
| 14. | inspect and package |

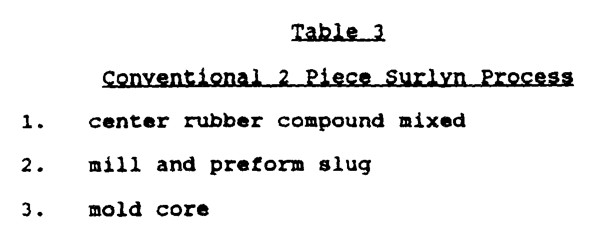

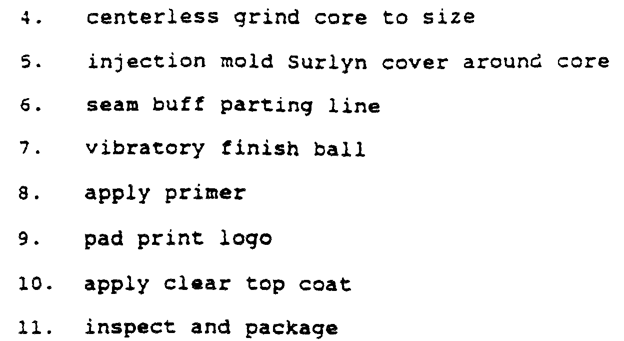

The balata cover is not fully cured and crosslinked until the 7 day cure step of step No. 17 in Table 1 is completed. As a result, the partially cured balata balls require more careful handling and additional process steps than the Surlyn balls. For example, after the balata balls are removed from the mold they must be frozen before the parting line seam on each ball is buffed. Also, because the balata covers are softer, they must be examined more carefully for defects which could be caused by the processing steps.

### Description of Prior Art Golf Ball Curing Systems

As stated previously, balata covers are generally vulcanized or cured using sulfur as the vulcanizing agent. Sulfur is included in the cover composition in an amount of about 1 to 2 parts by weight of the balata. The vulcanizing occurs during the final molding operation in which two hemispherical halfshells of the cover are molded over the thread-wound core in a compression mold. However, the molding temperature and time is limited by the threads, which can be damaged by high heat. Accordingly, the cover is not fully cured when it is removed from the mold and requires the exposure as described in Table 1, step 15 to accelerate the cure through migration of the RR2 crystals accelerator material into the cover crossectional area to complete the vulcanization of the cover. RR2 crystals are the reaction production of 1,1 methylene dipiperdine and carbon disulfide and are available from Resource Innovations, Inc. of Cartersville, Georgia. RR2 crystals are dissolved in isopropyl alcohol solvent in the amount of about 10 parts by weight of crystals to about 90 parts by weight of alcohol.

By way of example, one specific commercial balata covered ball which was sold by Wilson Sporting Goods Co. had the cover composition described in Table 4.

**Table 4**

| Prior Art Balata Cover Composition | |
|---|---|
| (Parts by Weight) | |
| Trans Polyisoprene | 84.00 |
| Natural Rubber or Polyisoprene | 16.00 |
| ZnO | 13.00 |
| TiO2 | 17.00 |
| Blue Toner | 0.20 |
| Stearic Acid | 0.26 |
| Thiozole Accelerator | 0.26 |
| Sulfur | 1.20 |
| Total | 131.92 |

This system was not completely crosslinked until steps 15 through 17 were performed in Table 1.

The zinc oxide was used as a filler and a gravity adjuster. The blue toner was used to enhance the white color and was Ultramarine Blue from Whittaker, Clark & Daniels, Inc. of South Plainfield, New Jersey.

Two piece or solid golf balls conventionally include a core which includes a thermally crosslinkable elastomer such as polybutadiene. The polybutadiene is cured or crosslinked by including in the core composition a crosslinking agent and a crosslinking initiator. common crosslinking agents are zinc salts of monocarboxylic acids such as zinc diacrylate, zinc acrylate, and zinc methacrylate. The crosslinking initiator provides free radicals, and common crosslinking initiators are organic peroxides such as dicumyl peroxide.

U.S. Patent Nos. 3,784,209, 4,065,537, 4,266,772, 4,483,537, 4,683,257, 4,688,801, 4,714,253, and 4,715,607 describe various solid cores for golf balls which include elastomers such as polybutadiene which are cured or crosslinked by zinc diacrylate and peroxide or similar ingredients.

U.S. Patent Nos. 4,792,141 and 4,931,376 describe golf ball covers which include blends of balata and elastomers such as polybutadiene and trans polyoctenylene rubber. However, the rubber compositions are cured by the conventional sulfur curing technique.

The invention provides a golf ball which has many of the desirable features of balata covered balls but is more durable and easier and less expensive to manufacture than conventional balata covered balls.

A golf ball cover in accordance with the invention includes a blend of balata and a thermally crosslinkable elastomer. The cross linkable elastomer is selected from polyoctenylene, homopolymers, copolymers and terpolymers of butadiene and homopolymers copolymers and terpolymers of chloropropene. The balata and elastomer are crosslinked during the molding of the ball by a crosslinker such as zinc diacrylate and a crosslinking initiator such as organic peroxide rather than using the conventional sulfur and RR2 crystals curing system for balata covers. The cover is completely crosslinked when the ball is removed from the mold and subsequent processing steps can be performed in the same manner as on Surlyn covered balls. The cover can be used in either 2 piece or 3 piece balls.

The invention will now be further described by way of example with reference to and as illustrated in the accompanying drawings; in which
Fig. 1 is a cross section of a two piece ball formed in accordance with the invention;
Fig. 2 is a cross section of a three piece ball formed in accordance with the invention; and
Figs. 3 and 4 are rheology charts showing curing comparisons of various balata covers.

The cover composition of the invention uses a blend of balata and one or more thermally crosslinkable elastomeric polymers. The balata can be either natural or synthetic balata or a blend of both. The thermally crosslinkable elastomers can be those which have heretofore been used in core compositions of golf balls.

Suitable crosslinkable elastomers include homopolymers, copolymers or terpolymers of butadiene, or chloroprene. Preferably, the elastomer is 1,4 polybutadiene having a cis structure in a proportion of at least 40%. Most preferably the polybutadiene rubber contains at least 90% and even more preferably at least 95% of cis-1,4 bonds. If desired, natural rubbers, polyisoprene rubbers, styrene/butadiene rubbers may be blended with the polybutadiene rubber.

Another suitable elastomer is polyoctenylene rubber having a high trans content. Such a product is available under the trade name Vestenamer from Huls Corp. of West Germany. Particular grades of Vestenamer which are suitable are Vestenamer 8012 and Vestenamer 6213.

The crosslinking agent can be one or more metallic salts of unsaturated fatty acids or monocarboxylic acids, particularly, zinc, calcium or magnesium salts of acrylic acid and methacrylic acid. Zinc diacrylate, zinc acrylate, and zinc methacrylate are particularly suitable.

Any of a number of known crosslinking initiators can be used. These initiators supply free radicals and include various organic peroxides such as dicumyl peroxide and n-Butyl-4, 4-bis (t-butylperoxy) valerate on calcium silicate, which is available from R. T. Vanderbilt, Inc. of Norwalk, connecticut under the trademark Varox 230XL. Suitable crosslinking agents and crosslinking initiators are described in the aforementioned patents which describe polybutadiene cores.

Any suitable filler can be added such as zinc oxide. Zinc oxide not only acts as a filler and as a gravity adjuster but may also provide crosslinking. Other conventional ingredients may also be included, such as titanium dioxide and Ultramarine Blue.

The balata is preferably present in an amount ranging from 25 parts by weight to 99 parts by weight of the total polymer content of the cover. The balance of the polymer content, namely from 75 parts by weight to 1 part by weight of the total polymer content, is preferably provided by polybutadiene having a high cis-1,4 content, but other suitable crosslinkable elastomers such as natural rubber, Vestenamer, can be blended with the polybutadiene as desired.

The amount of the crosslinking agent generally ranges from 20 to 50 parts by weight of the total polymer content, and is preferably about 35 to 45 parts by weight.

The amount of the crosslinker initiator can range from about 3/4 to 3-1/2 parts by weight of the total polymer content, and preferably is about 2 to 2-1/2 parts by weight.

### Example 1

A novel cover composition for a two piece ball was prepared using the ingredients (parts by weight) described in Table 5.

**Table 5**

| (Cover Composition) | |
|---|---|
| Trans Polyisoprene | 84.00 |
| Polybutadiene | 16.00 |
| ZnO | 13.00 |
| TiO2 | 17.00 |
| Blue Toner (Ultramarine Blue) | 0.50 |
| Zinc Diacrylate | 35.00 |
| Dicumyl Peroxide | 2.50 |
| Total | 168.00 |

One specific core composition used with the new cover is described in Table 6 (parts by weight).

**Table 6**

| (Core Composition) | |
|---|---|
| Polybutadiene | 95.00 |
| Vestenamer 8012 | 5.00 |
| Zinc Diacrylate | 42.00 |
| Zinc Oxide | 5.00 |
| Antioxidant | 0.75 |
| Dicumyl Peroxide | 1.50 |
| Total | 149.25 |

The antioxidant was 2,2'-Methylenebis (4-methyl-6-tertbutylphenol) which was obtained from R.T. Vanderbilt Co. of Norwalk, Connecticut under the trade name Vanox MBPC.

The core was processed according to the conventional steps:
1. core rubber compound mixed
2. mill and preform slug
3. mold core
4. centerless grind core to size.

The ground size of the core was 40.005 ± 0.127mm. (1.575 ± .005 inches) in diameter. The thickness of the cover was such as to make the diameter of the completed ball 42.672mm. (1.680 inches). For a 40.005mm. (1.575 inch) core, the thickness of the cover was 1.333mm. (0.0525 inch). However, it is understood that size of the core and cover can vary depending on the desired cover thickness for a specific end product. Traditional molding times and temperatures were used.

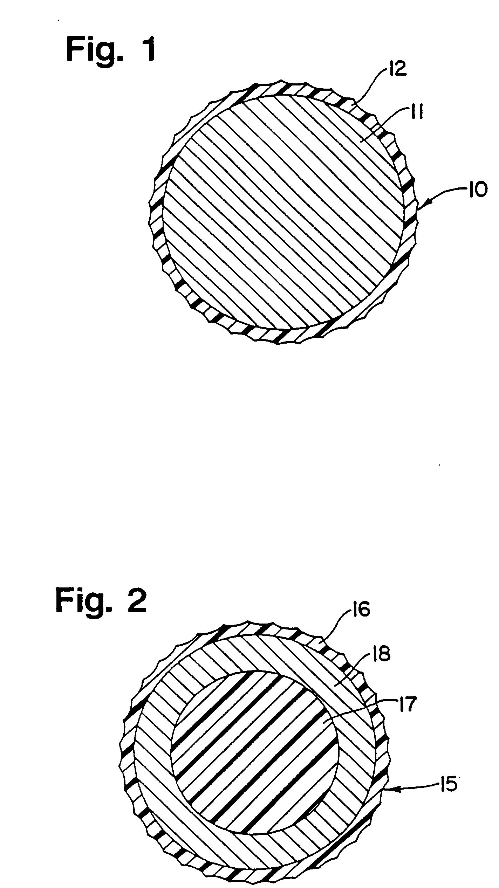

Figure 1 illustrates the two piece golf ball 10 which includes the core 11 and cover 12.

Figure 2 illustrates a three piece golf ball 15 with a new cover 16 formed in accordance with the invention. The core is formed by a conventional center 17 and a layer 18 of wound elastic thread. The diameter of the two piece core is conventionally about 39.624mm. (1.560 inches) and the thickness of the cover is about 1.524wm. (0.060 inch).

### Examples 2-10

Cores for two piece balls were made according to the formulas of Table 7.

**Table 7**

| (Core Compositions) | | | |
|---|---|---|---|
| | A | B | C |
| | EXGI-273 | EXGI-293 | EXGI-204 |
| Polybutadiene | 95.00 | 95.00 | 100.00 |
| Vestenamer 8012 | 5.00 | 5.00 | ------ |
| ZnO | 5.00 | 5.00 | 5.00 |
| ZDA | 42.00 | 42.00 | 42.00 |
| AO 2246 | .75 | .75 | .75 |
| Dicumyl Peroxide | 1.50 | 1.50 | 1.50 |
| Total | 149.25 | 149.25 | 149.25 |

A02246 is the same antioxidant which was used in Table 6.

Formulas EXG1-273 and EXGI-293 are identical. The difference is that 1-273 used a masterbatch which included all ingredients except the peroxide. The masterbatch was milled in an internal mixer, and the peroxide was added to the milled masterbatch on an open mill. The 1-293 formula was mixed completely in an internal mixer.

Covers for two piece balls were made according to the formulas of Table 8.

**Table 8**

| (Cover Compositions) | | | |
|---|---|---|---|
| | EXG24-47 | EXG24-60 | EXG24-70 |
| Trans-Polyisoprene TP-301 | 84.00 | 84.00 | 55.00 |
| Vestenamer 8012 | 16.00 | ----- | ----- |
| Polybutadiene | ----- | 16.00 | 45.00 |
| ZnO | 13.00 | 13.00 | 13.00 |
| ZDA | 35.00 | 35.00 | 35.00 |
| TiO2 | 17.00 | 17.00 | 17.00 |
| Toner (UM Blue) | .50 | .50 | .50 |
| Varox 230XL | 3.00 | 2.50 | 2.50 |
| Total | 168.50 | 168.00 | 168.00 |

Nine groups of balls were made by combining the foregoing cores and covers. The balls were designated as follows:

| Ball | Core | Cover |
|---|---|---|
| A47 | EXG1-273 | EXG24-47 |
| A60 | EXG1-273 | EXG24-60 |
| A70 | EXG1-273 | EXG24-70 |
| B47 | EXG1-293 | EXG24-47 |
| B60 | EXG1-293 | EXG24-60 |
| B70 | EXG1-293 | EXG24-70 |
| C47 | EXG1-294 | EXG24-47 |
| C60 | EXG1-294 | EXG24-60 |
| C70 | EXG1-294 | EXG24-70 |

The dimple pattern which was used on the balls was a 432 dimple pattern illustrated in Figures 7 and 8 of U.S. Patent No. 4,560,168 using spherical dimples. The balls were tested by a mechanical hitting machine using a 9 iron golf club and were compared with commercial balls sold under the trademarks Ultra AR432 (Wilson Sporting Goods), Tour Edition 100 (Spalding), and Titleist Tour 100 (Acushnet). The Ultra AR 432 is a two piece ball with a Surlyn cover. The Tour Edition 100 is a two piece ball with a cover which is advertised as Zinthane but which is believed to be a blend of low modulus ionomers similar to Surlyn. The Titleist Tour 100 is a three piece ball with a balata cover, which is believed to be cured by the conventional sulfur curing system.

The results are set forth in Tables 9-11.

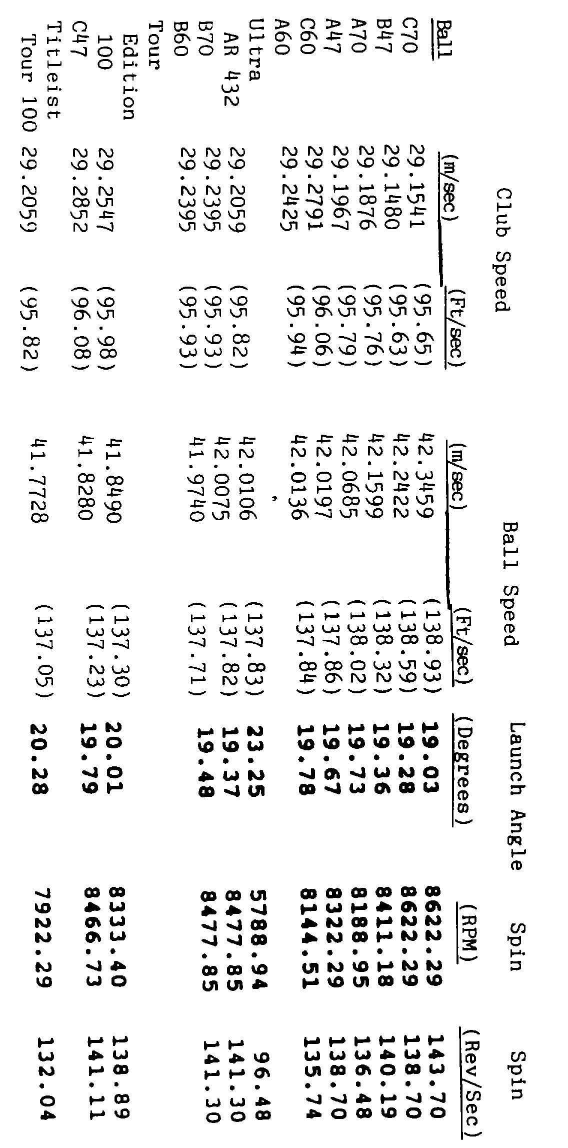

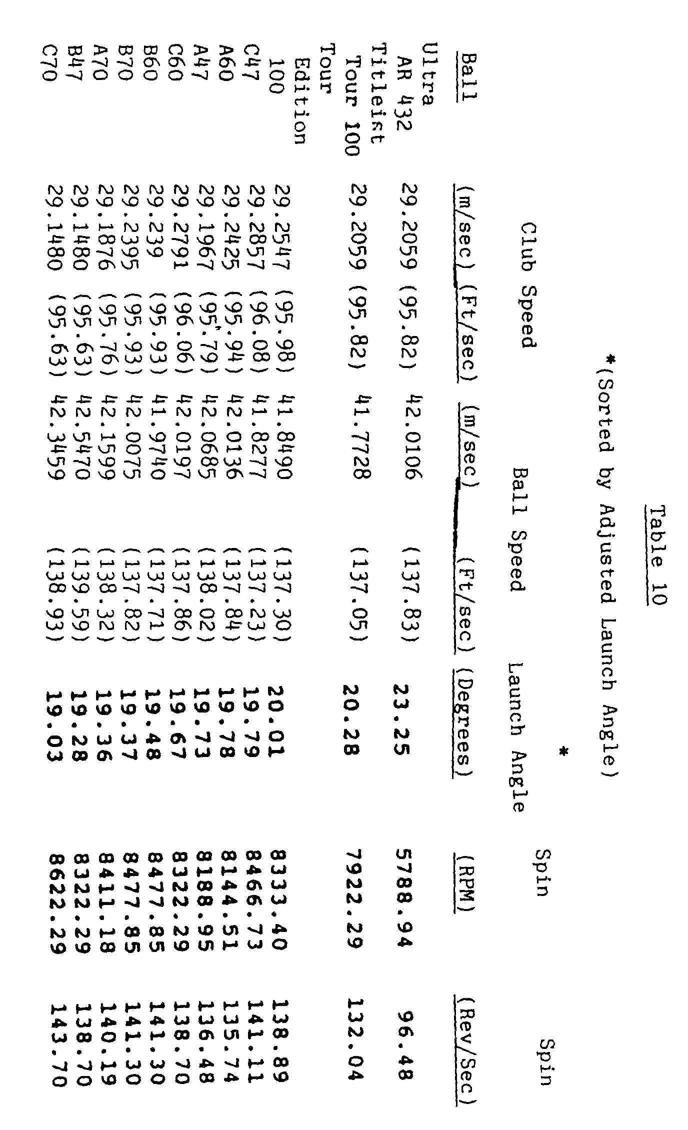

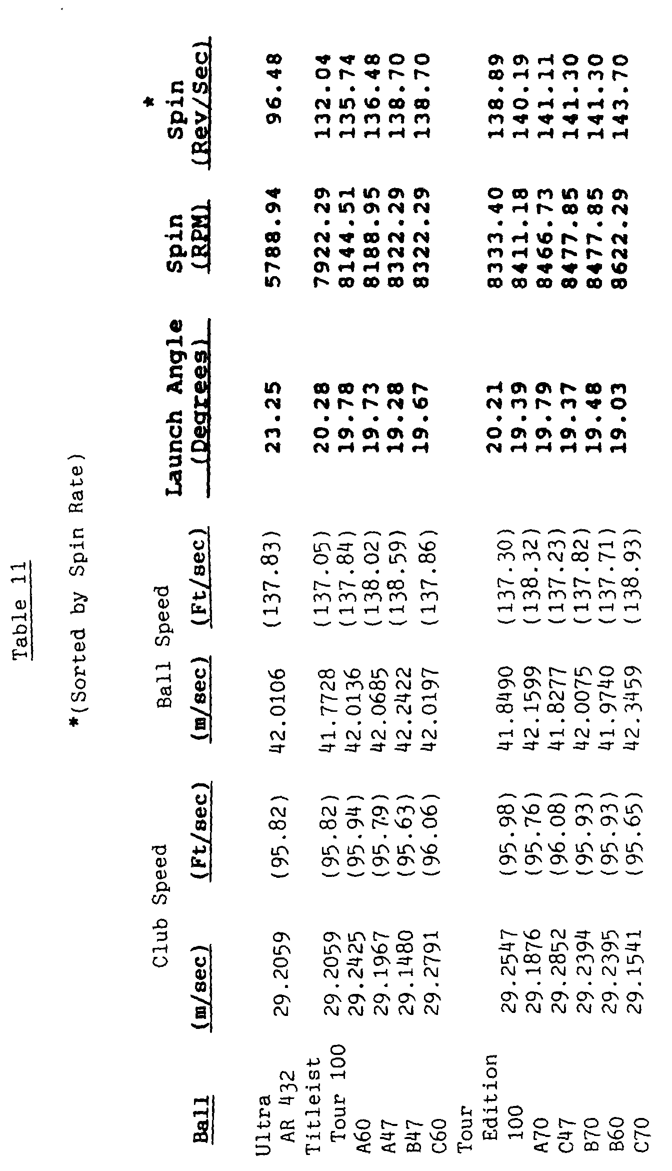

The Tour Edition 100 ball is promoted as a two piece ball which has some of the feel and characteristics of a balata ball. Tables 9-11 indicate that the novel two piece balls compare favorably with the Tour Edition 100 ball. It is believed that the performance of the novel balls will be improved by optimizing the dimple pattern for the balls.

The same matrix of balls were tested using the same mechanical hitting machine with an Ultra metal driver golf club. The results are set forth in Tables 12-14.

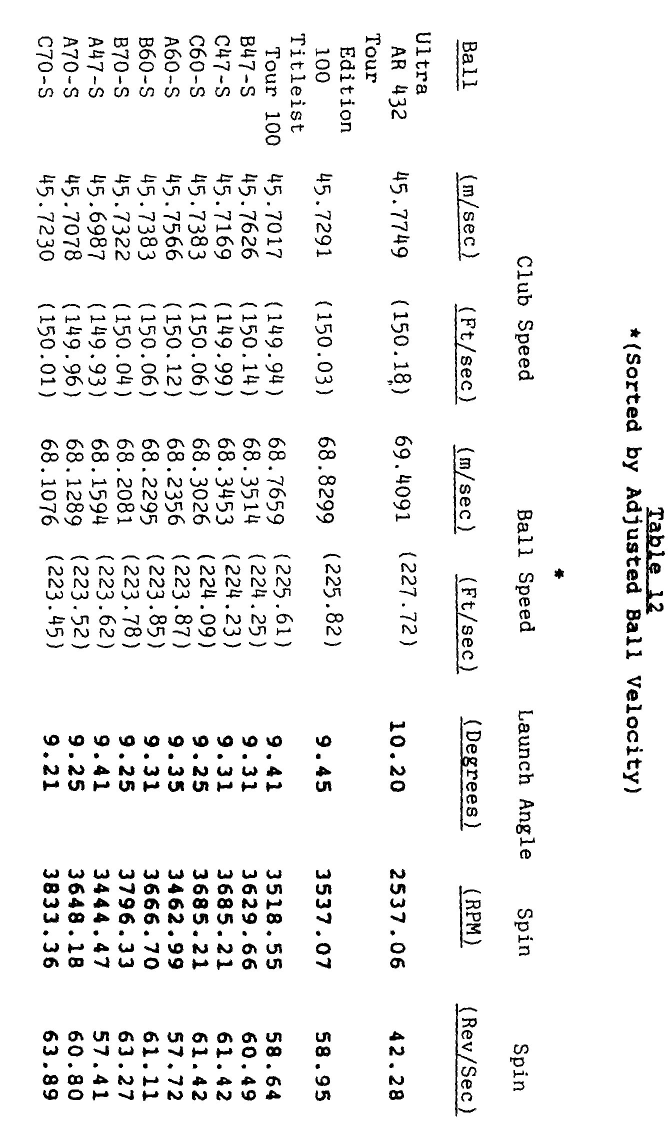

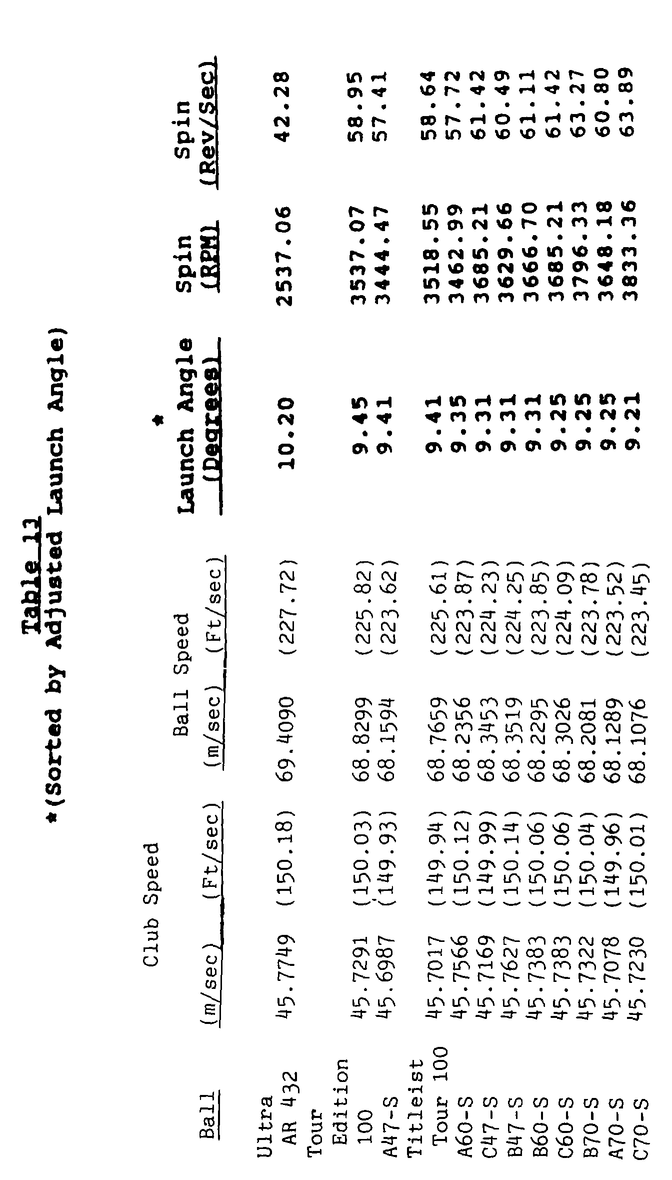

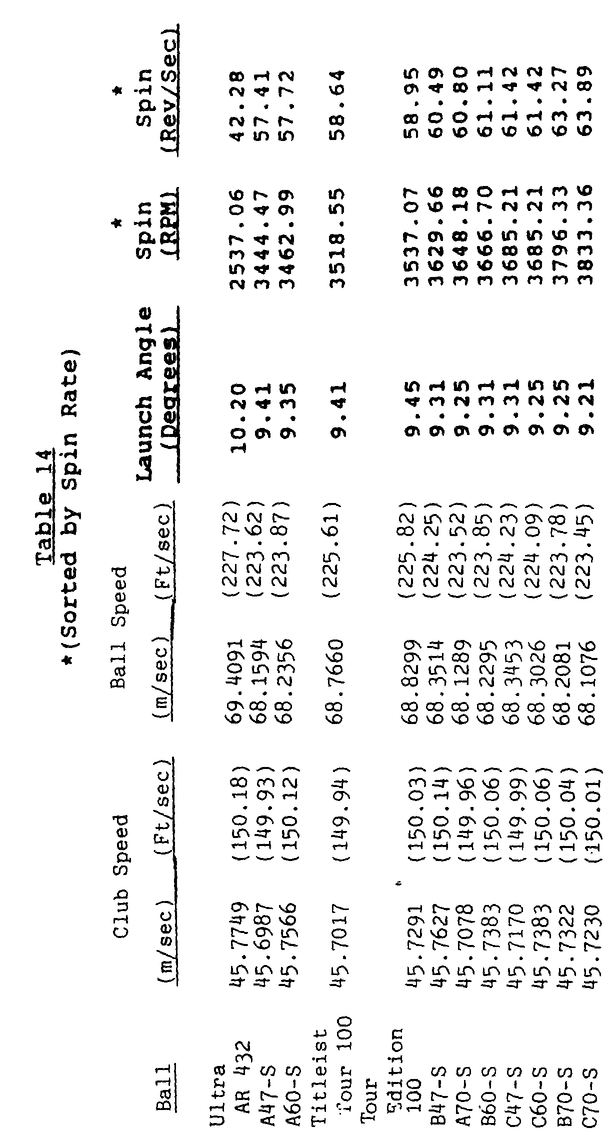

The balls were also flight tested on the hitting machine with a metal driver sold by Wilson Sporting Goods under the trademark Ultra. The speed of the club at impact was 150 feet per second. The initial velocity was measured in accordance with the specification of the United States Golf Association and the carry and total distance were measured. The results are set forth in Table 15.

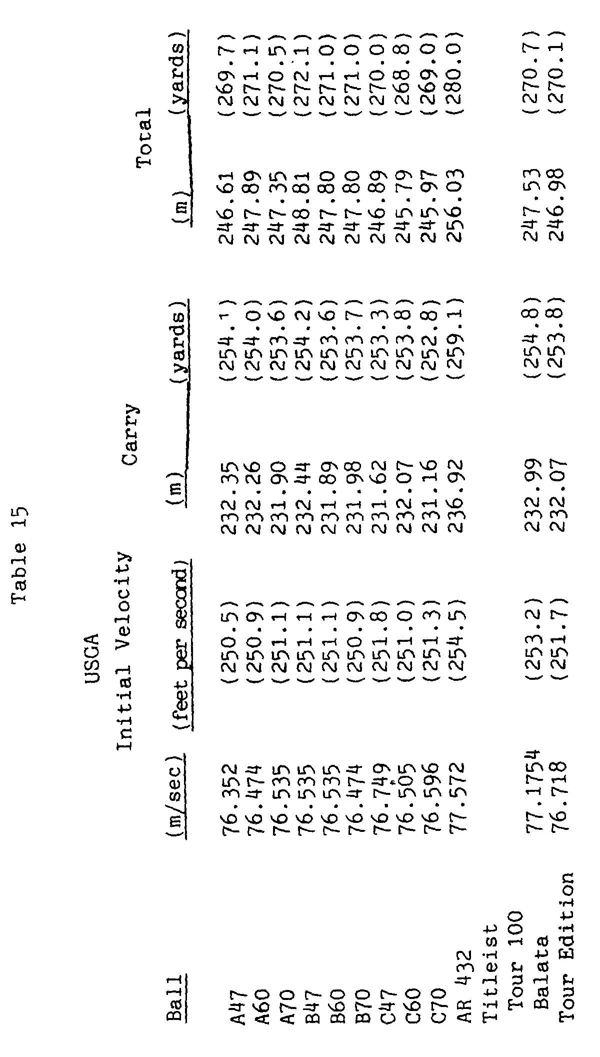

Additional test were performed on selected balls using a driver at speeds of 45.720 and 39.624 metres per second (150 and 130 feet per second) and a 5 iron at a speed of 35.052 metres per second (115 feet per second) as set forth in Table 16.

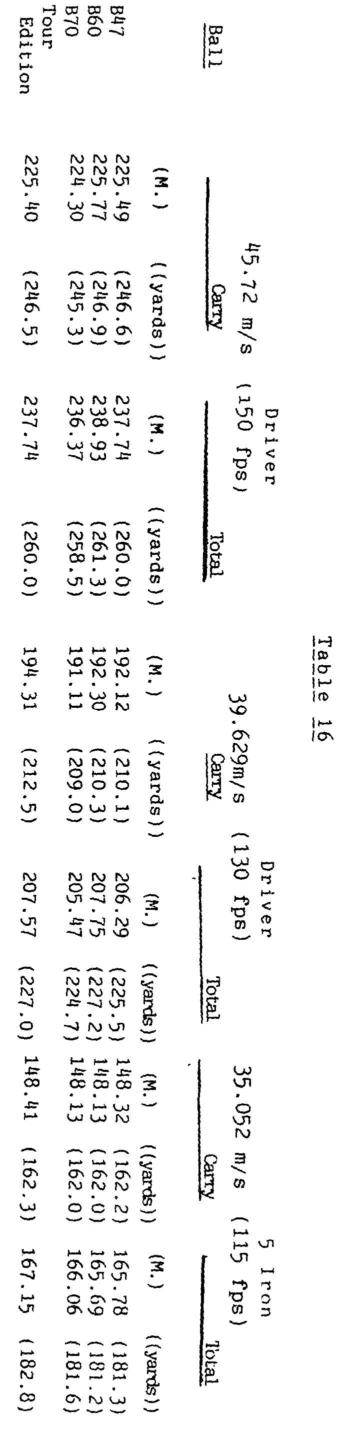

The coefficient of restitution (COR) of the balls were measured as set forth in Table 17. Coefficient of restitution is measured by firing the ball against a metal plate and determining the ratio of the rebound speed with the inbound speed. Inbound speeds of 36.576 and 44.196 metres per second (120 and 145 feet per second) were used.

**Table 17**

| | COR | |
|---|---|---|
| Ball | 36.576m/s (120 fps) | 44.196m/s (145 fps) |
| A47 | 0.8072 | 0.7904 |
| A60 | 0.8199 | 0.7864 |
| A70 | 0.8060 | 0.7966 |
| B47 | 0.8168 | 0.7966 |
| B60 | 0.8021 | 0.7816 |
| B70 | 0.8009 | 0.7898 |
| C47 | 0.8137 | 0.7941 |
| C60 | 0.8084 | 0.7856 |
| C70 | 0.8256 | 0.7985 |
| AR 432 | 0.8463 | 0.805 |
| Titleist | | |
| Tour 100 Balata | 0.8275 | 0.7983 |
| Tour Edition | 0.8096 | 0.7888 |

Tables 18 and 19 set forth additional formulas for the core and the cover of a two piece ball. It is believed that the core compositions of Table 18 will have increased COR and that the cover compositions of Table 19 will have increaaed initial velocity.

**Table 18**

| Core Compositions | | | |
|---|---|---|---|
| | D | E | F |
| | EXG1-298 | EXGI-299 | EXG1-300 |
| Polybutadiene | 95.00 | 95.00 | 95.00 |
| Vestenamer 8012 | 5.00 | 5.00 | 5.00 |
| ZnO | 3.80 | 4.90 | 3.75 |
| ZDA | 45.00 | 42.00 | 45.00 |
| AO 2246 | .75 | .25 | .25 |
| Dicumyl Peroxide | 1.50 | .75 | .75 |
| Total | 153.35 | 149.10 | 150.87 |

**Table 19**

| Cover Compositions | | | |
|---|---|---|---|
| | EXG24-72 | EXG24-73 | EXG24-74 |
| Trans-Polyisoprene (TP-301) | 84.00 | 84.00 | 84.00 |
| Polybutadiene | 16.00 | 16.00 | 16.00 |
| ZnO | 13.00 | 5.00 | 5.00 |
| ZDA | 35.00 | 35.00 | 35.00 |
| TiO2 | 17.00 | 17.00 | 17.00 |
| Toner (UM Blue) | .50 | .50 | .50 |
| Dicumyl peroxide | 1.50 | 1.50 | ---- |
| Varox 230 XL | ---- | ---- | 2.50 |
| Total | 167.00 | 159.00 | 160.00 |

The golf ball covers of the Examples are made by conventional mixing and molding procedures. The components of the composition are mixed on a mill such as two roll mill to form slabs. Slabs are fed into a dicer which cubes the cover compound prior to the injection molding to form generally hemispherical halfshells. The halfshells are placed about the core of the ball in a compression molding machine which fuses the halfshells to each other and to the core. The compression molding operation is carried out under a temperature of about 121.1-176.7 °C (250 to 350°F)for about 5 to 10 minutes. The molding temperature causes the elastomer to crosslink, and it is believed that the ball is fully crosslinked when it is removed from the compression mold.

The cover composition can also be used in a conventional injection molding machine to form an injection molded cover about a solid core.

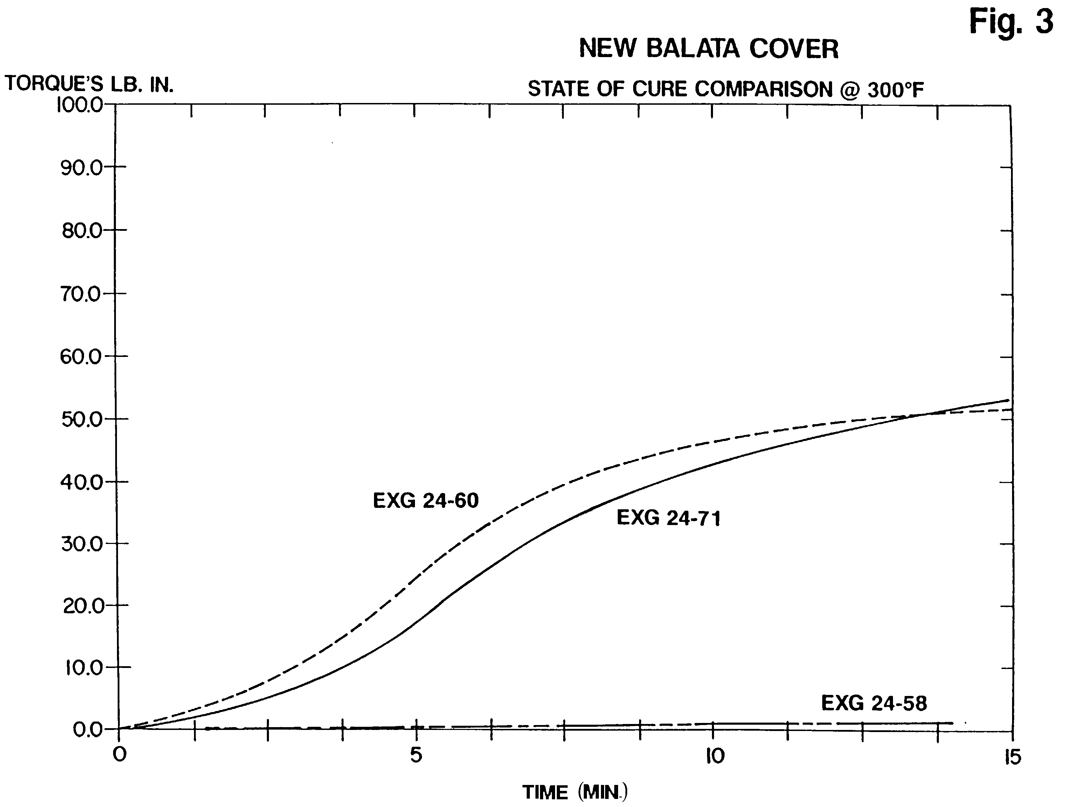

The rheology chart of Figure 3 shows that the crosslinking agent causes crosslinking of not only the polybutadiene but also of the balata and that the composition is fully crosslinked after the molding operation. The rheology chart was prepared by tests conducted on a Monsanto Moving Die Rheometer MDR 2000 available from Monsanto Instruments & Equipment of Akron, Ohio. The rheometer is used to measure cure characteristics of rubber and measures the reaction torque as a function of cure time or degree of vulcanization. Curing was performed at 300°F.

Figure 3 compares the following cover formulas:

| | |
|---|---|
| EXG24-60: | from Table 8 |
| EXG24-71: | same as EXG24-60 but without polybutadiene |
| EXG24-58: | same as EXG24-60 but without polybutadiene and peroxide |

EXG24-58 without peroxide exhibits very poor curing characteristics. The other two formulas have comparable curves, which indicate that the composition which includes balata and polybutadiene is just as crosslinkable as the composition which contains only balata and no polybutadiene.

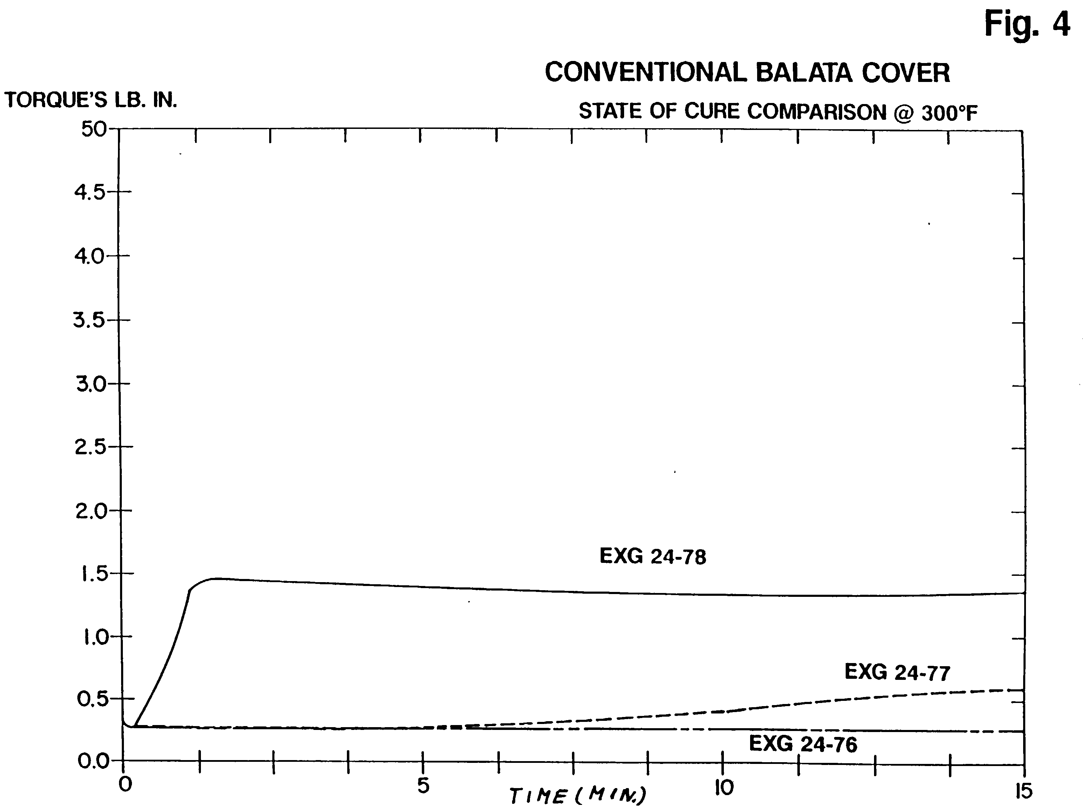

Figure 4 is a rheology chart which compares the three balata cover compositions set forth in Table 20.

**Table 20**

| (Cover Compositions) | | | |
|---|---|---|---|
| | EXG24-78 | EXG24-77 | EXG24-76 |
| Trans Polyisoprene | 84.00 | 84.00 | 84.00 |
| Natural Rubber | 16.00 | 16.00 | 16.00 |
| ZnO | 13.00 | 13.00 | 13.00 |
| TiO2 | 17.00 | 17.00 | 17.00 |
| UM Blue | .20 | .20 | .20 |
| Stearic Acid | .26 | .26 | .26 |
| Thiozale Accelerator | .26 | .26 | .26 |
| Sulfur | 1.20 | 1.20 | --- |
| RR-2 Crystals | 1.50 | --- | --- |
| Total | 133.42 | 131.92 | 130.72 |

Formula EXG24-78 is comparable to a conventional prior art balata cover which is cured by sulfur and the step of soaking the completed ball in an alcohol/RR2 crystal solution described in Step No. 15 of Table 1. However, in order to test the composition on the MDR 2000 Rheometer the RR2 crystals were incorporated into the composition to simulate the subsequent soaking step.

Formula EXG24-77 is the same as formula EXG24-78 but omits the RR2 crystals. Formula EXG24-76 is the same as formula EXG24-78 but omits both sulfur and the RR2 crystals.

It is significant to note the difference between the cure rheology of the balata compositions illustrated in Figure 4 and the new balata compositions cured by zinc diacrylate and peroxide illustrated in Figure 3. The rheology physical properties for the compositions in Figure 4 are so low compared to the compositions of Figure 3 that the scale of Figure 4 had to be changed from 0 to 100 torque units to 0 to 5 torque units in order to be meaningful. The cover composition of formula EXG24-60 of Figure 3 has significantly higher torque than formula EXG24-78 of Figure 4. Also, the rheology cure curve for formula EXG24-78 shown reversion, while the cure curve of formula EXG24-60 shows essentially a curve which is flatlined.

Because the covers of molded golf balls formed in accordance with the invention are fully crosslinked after the molding operation, the golf balls can be processed in a manner in which is very similar to the processing of Surlyn covered balls, thereby greatly facilitating the additional processing steps and reducing the overall cost of the balls. The processing steps for 3 piece and 2 piece balls formed in accordance with the invention are described in Table 21 and 22, and these processing steps can be compared with the steps described in Tables 1-3.

**Table 21**

| New 3 Piece Balata Process | |
|---|---|
| 1. | center rubber compound mixed |
| 2. | mill and preform slug |
| 3. | mold center |
| 4. | center flash removed |
| 5. | wind center with heat resistant thread |
| 6. | injection mold halfshell covers |
| 7. | place halfshells over core |
| 8. | compression mold ball |
| 9. | seam buff parting line |
| 10. | vibratory finish ball |
| 11. | apply primer |
| 12. | logo print |
| 13. | apply clear top coat |
| 14. | inspect and package |

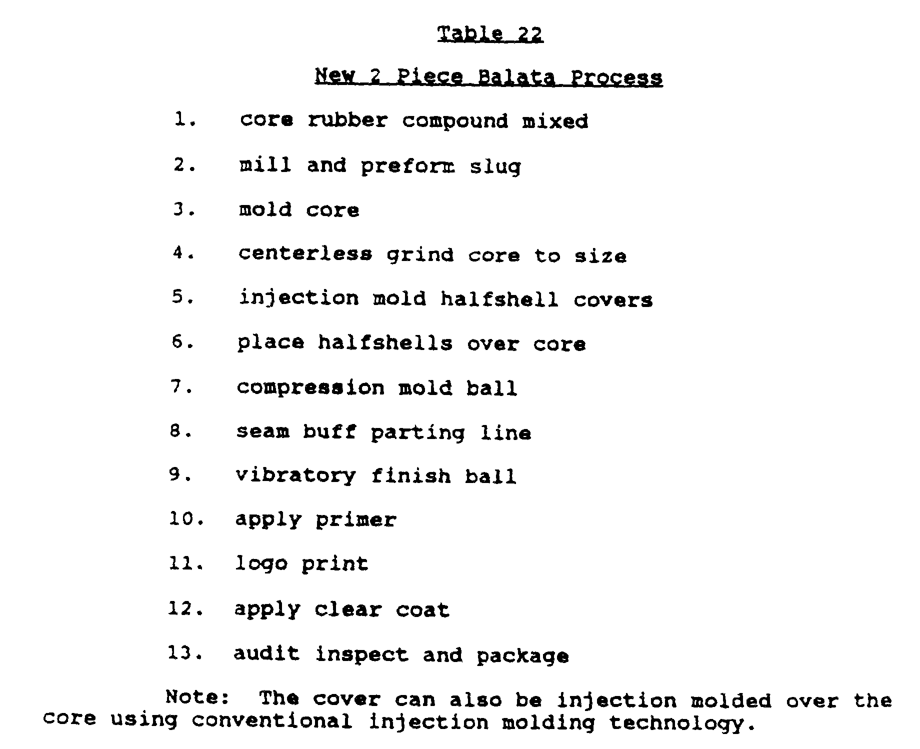

Steps 5 and 10 through 25 in Table 1 have been eliminated using the new technology described in Tables 21 and 22. The 30 steps used to process balata covers in the old procedure have been replaced by 14 steps for 3 piece balls and 13 steps for 2 piece balls.

Cut-resistance tests have not yet been performed on balls with the new covers. However, it is believed that the cut resistance of the new covers will be significantly better than the cut resistance of conventional balata balls, thereby substantially increasing the durability of the covers.

While in the foregoing specification a detailed description of specific embodiments of the invention were set forth for the purpose of illustration, it will be understood that many of the details herein given may be varied considerably by those skilled in the art without departing from the scope of the claims.

## Claims

1. A golf ball comprising a core and a cover wherein the cover having a different composition to this core is formed from a composition comprising:
a) natural or synthetic balata;
b) an elastomer which is crosslinkable with a metallic salt of an unsaturated fatty acid, said elastomer being selected from polyoctenylene, homopolymers, copolymers and terpolymers of butadiene and homopolymers, copolymers and terpolymers of chloroprene;
c) a metallic salt of an unsaturated fatty acid as a crosslinking agent; and
d) a crosslinking initiator which provides a source of free radicals.

2. A golf ball as claimed in claim 1, in which the elastomer is selected from the group consisting of polybutadiene and polyoctenylene.

3. A golf ball as claimed in claim 1 or 2, in which the natural or synthetic balata is present in an amount ranging from 25 to 99% of the total weight of polymer and the crosslinkable elastomer is present in an amount ranging from 1 to 75% of the total weight of polymer.

4. A golf ball as claimed in any one of the preceding claims, in which the crosslinking agent is selected from the group of metallic salts consisting of calcium and magnesium.

5. A golf ball as claimed in any one of the preceding claims, in which the crosslinking agent is selected from the group of zinc, calcium, and magnesium salts of unsaturated fatty acids.

6. A golf ball as claimed in any one of the preceding claims, in which the crosslinking initiator is organic peroxide.

7. A golf ball as claimed in any one of the preceding claims, in which the core is a solid core.

8. A golf ball as claimed in any one of claims 1 to 6, in which the core is a 2 piece core comprising a centre and a layer of elastic windings over the centre.

9. A golf ball as claimed in any one of the preceding claims, in which the crosslinkable elastomer is polybutadiene.

10. A golf ball as claimed in claim 9, in which the polybutadiene is cis 1,4 polybutadiene having a cis content of at least 40%.

11. A golf ball comprising a core and a cover wherein the cover having a different composition is formed from a composition comprising:
a) from 25 to 99 parts by weight (based on the total polymer content) of natural or synthetic balata;
b) from 1 to 75 parts by weight (based on the total polymer content) of an elastomer which is crosslinkable with a metallic salt of an unsaturated fatty acid said elastomer being selected from polyoctenylene, homopolymers, copolymers and terpolymers of butadiene and homopolymers, copolymers and terpolymers of chloroprene;
c) from 20 to 50 parts by weight (based on the total polymer content) of a metallic salt of an unsaturated fatty acid as a crosslinking agent; and
d) from 3/4 to 3-1/2 parts by weight (based on the total polymer content) of a crosslinking initiator which provides a source of free radicals.

12. A golf ball as claimed in claim 11, in which the cross-linkable elastomer is polybutadiene.

13. A golf ball as claimed in claim 12, in which the polybutadiene is cis 1,4 polybutadiene having a cis content of at least 40%.

14. A method of making a golf ball comprising a core and a cover, wherein the cover having a different composition than the core is formed from an admixture of natural or synthetic balata and a crosslinkable elastomer said elastomer being selected from polyoctenylene, homopolymers, copolymers and terpolymers of butadiene and homopolymers, copolymers and terpolymers of chloroprene, said method comprising the inclusion of a metallic salt of an unsaturated fatty acid as a crosslinking agent and a source of free radicals as a crosslinking initiator.

15. A method of making a golf ball comprising the steps of:
a) forming an admixture of natural or synthetic balata, a crosslinkable elastomer, a metallic salt of an unsaturated fatty acid as a crosslinking agent, and a crosslinking initiator which provides a source of free radicals;
b) milling the admixture to form a blended composition; and
c) molding the blended composition about a golf ball core having a different composition to the cover, to crosslink the crosslinkable elastomer said elastomer being selected from polyoctenylene, homopolymers, copolymers and terpolymers of butadiene and homopolymers, copolymers and terpolymers of chloroprene.

16. A method as claimed in claim 15 in which the molding is performed under a temperature of about 121.1-176.7 °C (250 to 350°F) for about 5 to 10 minutes.

## Patentansprüche

1. Golfball, der einen Kern und eine Ummantelung umfaßt, worin die Ummantelung eine andere Zusammensetzung als dieser Kern aufweist, der aus einer Zusammensetzung gebildet ist, die folgendes umfaßt:
a) Natürliches oder synthetisches Balata;
b) ein Elastomer, welches mit einem Metallsalz von einer ungesättigten Fettsäure vernetzbar ist, wobei genanntes Elastomer unter Polyoctenylen, Homopolymeren, Copolymeren und Terpolymeren von Butadien und Homopolymeren, Copolymeren und Terpolymeren von Chloropren ausgewählt wird;
c) ein Metallsalz von einer ungesättigten Fettsäure als ein Vernetzungsmittel und
d) einen Vernetzungsinitiator, welcher eine Quelle freier Radikale bereitstellt.

2. Golfball nach Anspruch 1, worin das Elastomer aus der Gruppe ausgewählt wird, die aus Polybutadien und Polyoctenylen besteht.

3. Golfball nach Anspruch 1 oder 2, worin das natürliche oder synthetische Balata in einer Menge vorliegt, die in einem Bereich von 25 bis 99% des Gesamtgewichtes des Polymers liegt und das vernetzbare Elastomer in einer Menge vorliegt, die in einem Bereich von 1 bis 75% des Gesamtgewichtes des Polymers liegt.

4. Golfball nach einem der vorangehenden Ansprüche, worin das Vernetzungsmittel unter der Gruppe von Metallsalzen aus Calcium und Magnesium ausgewählt wird.

5. Golfball nach einem der vorangehenden Ansprüche, worin das Vernetzungsmittel unter der Gruppe aus Zink-, Calciumund Magnesiumsalzen von ungesättigten Fettsäuren ausgewählt wird.

6. Golfball nach einem der vorangehenden Ansprüche, worin der Vernetzungsinitiator organisches Peroxid ist.

7. Golfball nach einem der vorangehenden Ansprüche, worin der Kern ein fester Kern ist.

8. Golfball nach einem der Ansprüche 1 bis 6, worin der Kern ein zweiteiliger Kern ist, der ein Zentrum und eine Schicht aus elastischen Wicklungen über dem Zentrum umfaßt.

9. Golfball nach einem der vorangehenden Ansprüche, worin das vernetzbare Elastomer Polybutadien ist.

10. Golfball nach Anspruch 9, worin das Polybutadien cis-1,4-Polybutadien mit einem cis-Gehalt von mindestens 40% ist.

11. Golfball, der einen Kern und eine Ummantelung umfaßt, worin die Ummantelung, die eine andere Zusammensetzung aufweist, aus einer Zusammensetzung gebildet ist, die folgendes umfaßt:
a) Von 25 bis 99 Gewichtsteile (bezogen auf den Gesamtpolymergehalt) natürliches oder synthetisches Balata;
b) von 1 bis 75 Gewichtsteile (bezogen auf den Gesamtpolymergehalt) eines Elastomers, das mit einem Metallsalz von einer ungesättigten Fettsäure vernetzbar ist, wobei genanntes Elastomer unter Polyoctenylen, Homopolymeren, Copolymeren und Terpolymeren von Butadien und Homopolymeren, Copolymeren und Terpolymeren von Chloropren ausgewählt wird;
c) von 20 bis 50 Gewichtsteile (bezogen auf den Gesamtpolymergehalt) eines Metallsalzes von einer ungesättigten Fettsäure als ein Vernetzungsmittel und
d) von ¾ bis 3½ Gewichtsteile (bezogen auf den Gesamtpolymergehalt) eines Vernetzungsinitiators, welcher eine Quelle freier Radikale bereitstellt.

12. Golfball nach Anspruch 11, worin das vernetzbare Elastomer Polybutadien ist.

13. Golfball nach Anspruch 12, worin das Polybutadien cis-1,4-Polybutadien mit einem cis-Gehalt von mindestens 40% ist.

14. Verfahren zur Herstellung eines Golfballs, der einen Kern und eine Ummantelung umfaßt, worin die ummantelung, die eine andere Zusammensetzung als der Kern aufweist, aus einer Beimischung aus natürlichem oder synthetischem Balata und einem vernetzbaren Elastomer gebildet ist, wobei genanntes Elastomer unter Polyoctenylen, Homopolymeren, Copolymeren und Terpolymeren von Butadien und Homopolymeren, Copolymeren und Terpolymeren von Chloropren ausgewählt wird, wobei genanntes Verfahren den Einschluß eines Metallsalzes von einer ungesättigten Fettsäure als ein vernetzungsmittel und eine Quelle freier Radikale als einen Vernetzungsinitiator umfaßt.

15. Verfahren zur Herstellung eines Golfballs, das die folgenden Schritte umfaßt:
a) Bilden einer Beimischung aus natürlichem oder synthetischem Balata, einem vernetzbaren Elastomer, einem Metallsalz von einer ungesättigten Fettsäure als ein vernetzungsmittel und einem Vernetzungsinitiator, welcher eine Quelle freier Radikale bereitstellt;
b) Mahlen der Beimischung zur Bildung einer zusammengemischten Zusammensetzung und
c) Formen der zusammengemischten Zusammensetzung über einen Golfballkern, der eine andere Zusammensetzung als die Ummantelung aufweist, um das vernetzbare Elastomer zu vernetzen, wobei genanntes Elastomer unter Polyoctenylen, Homopolymeren, Copolymeren und Terpolymeren von Butadien und Homopolymeren, Copolymeren und Terpolymeren von Chloropren ausgewählt wird.

16. Verfahren nach Anspruch 15, worin das Formen unter einer Temperatur von circa 121,1 - 176,7 C (250 bis 350 F) für eine Zeitdauer von circa 5 bis 10 Minuten durchgeführt wird.

## Revendications

1. Balle de golf comprenant un noyau et un revêtement dans laquelle le revêtement ayant une composition différente de celle de ce noyau est formé à partir d'une composition comprenant:
a) du balata naturel ou synthétique;
b) un élastomère qui est réticulable avec un sel métallique d'un acide gras non saturé, ledit élastomère étant sélectionné à partir de polyocténylène, homopolymères, copolymères et terpolymères de butadiène et d'homopolyméres, copolymères et terpolymères de chloroprène;
c) un sel métallique d'un acide gras non saturé comme agent de réticulation; et
d) un excitant de réticulation qui fournit une source de radicaux libres.

2. Balle de golf selon la revendication 1, dans laquelle l'élastomère est sélectionné dans le groupe consistant de polybutadiène et polyocténylène.

3. Balle de golf selon la revendication 1 ou 2, dans laquelle le balata naturel ou synthétique est présent en une quantité allant de 25 à 99% du poids total de polymère et l'élastomère réticulable est présent en une quantité allant de 1 à 75% du poids total de polymère.

4. Balle de golf selon l'une quelconque des revendications précédentes, dans laquelle l'agent de réticulation est sélectionné dans le groupe de sels métalliques consistant en calcium et magnésium.

5. Balle de golf selon l'une quelconque des revendications précédentes, dans laquelle l'agent de réticulation est sélectionné dans le groupe de sels de zinc, calcium et magnésium d'acides gras non saturés.

6. Balle de golf selon l'une quelconque des revendications précédentes, dans laquelle l'excitant de réticulation est du peroxide organique.

7. Balle de golf selon l'une quelconque des revendications précédentes, dans laquelle le noyau est un noyau plein.

8. Balle de golf selon l'une quelconque des revendications 1 à 6, dans laquelle le noyau est un noyau en 2 parties comprenant un centre et une couche d'enroulements élastiques par dessus le centre.

9. Balle de golf selon l'une quelconque des revendications précédentes, dans laquelle l'élastomère réticulable est du polybutadiène.

10. Balle de golf selon la revendication 9, dans laquelle le polybutadiène est du polybutadiène cis 1,4 ayant un contenu cis d'au moins 40%.

11. Balle de golf comprenant un noyau et un revêtement dans laquelle le revêtement ayant une composition différente est formé à partir d'une composition comprenant:
a) de 25 à 99 parties en poids (basées sur le contenu de polymère total) de balata naturel ou synthétique;
b) de 1 à 75 parties en poids (basées sur le contenu de polymère total) d'un élastomère qui est réticulable avec un sel métallique d'un acide gras non saturé ledit élastomère étant sélectionné à partir de polyocténylène, homopolymères, copolymères et terpolymères de butadiène et d'homopolyméres, copolymères et terpolymères de chloroprène;
c) de 20 à 50 parties en poids (basées sur le contenu de polymère total) d'un sel métallique d'un acide gras non saturé comme agent de réticulation; et
d) de 3/4 à 3-1/2 parties en poids (basées sur le contenu de polymère total) d'un excitant de réticulation qui fournit une source de radicaux libres.

12. Balle de golf selon la revendication 11, dans laquelle l'élastomère réticulable est du polybutadiène.

13. Balle de golf selon la revendication 12, dans laquelle le polybutadiène est du polybutadiène cis 1,4 ayant un contenu cis d'au moins 40%.

14. Méthode de fabrication d'une balle de golf comprenant un noyau et un revêtement, dans laquelle le revêtement ayant une composition différente de celle du noyau est formé à partir d'un mélange de balata naturel ou synthétique et d'un élastomère réticulable ledit élastomère étant sélectionné à partir de polyocténylène, homopolymères, copolymères et terpolymères de butadiène et d'homopolymères, copolymères et terpolymères de chloroprène, ladite méthode comprenant l'inclusion d'un sel métallique d'un acide gras non saturé comme agent de réticulation et une source de radicaux libres comme excitant de réticulation.

15. Méthode de fabrication de balle de golf comprenant les opérations de:
a) formation d'un mélange de balata naturel ou synthétique, d'un élastomère réticulable, d'un sel métallique d'un acide gras non saturé comme agent de réticulation, et d'un excitant de réticulation qui fournit une source de radicaux libres;
b) malaxage du mélange pour former une composition mélangée; et
c) moulage de la composition mélangée autour d'un noyau de balle de golf ayant une composition différente de celle du revêtement, pour réticuler l'élastomère réticulable ledit élastomère étant sélectionné à partir de polyocténylène, homopolymères, copolymères et terpolymères de butadiène et d'homopolymères, copolymères et terpolymères de chloroprène;

16. Méthode selon la revendication 15, dans laquelle le moulage est effectué sous une température d'environ 121,1 à 176,7°C (250 à 350°F) pendant 5 à 10 minutes environ.
